# EUROPEAN PATENT APPLICATION

(11) **EP 2 821 633 A1**
(43) Date of publication of application: **07.01.2015**
(21) Application number: 13755381.4
(22) Date of filing: 28.02.2013
(51) Int. Cl.: F02M 59/36, F02M 55/02, F02M 59/48

(54) **FUEL INJECTION PUMP**

(30) Priority: 02.03.2012 JP 2012047338
(71) Applicant: Yanmar Co., Ltd., Osaka-shi, Osaka 530-8311 (JP); Woodward, Inc., Fort Collins, CO 80525 (US)
(72) Inventor: UMEDA Shinya, Osaka-shi Osaka 530-8311 (JP); EGASHIRA Takanori, Osaka-shi Osaka 530-8311 (JP); MACHIYAMA Hiroyuki, Osaka-shi Osaka 530-8311 (JP); SONE Kazutaka, Osaka-shi Osaka 530-8311 (JP); KIECHLE Stefan, Aken D06385 (DE)
(74) Representative: Jostarndt, Hans-Dieter
(86) International application number: PCT/JP2013/055468
(87) International publication number: WO 2013/129592

(57) **Abstract**

The purpose of the present invention is to provide a fuel injection pump 1 wherein it is possible to easily position the second fuel supply path 21b of a housing 21 with the fuel supply hole 22a functioning as the fuel path of an insert piece 22, and to secure the insert piece 22 such that same does not rotate within the housing 21. The fuel injection pump 1 is provided with an electromagnetic spill valve 20, wherein the electromagnetic spill valve 20 is equipped with: the housing 21 on which an insert piece hole 21d is formed; the insert piece 22 which is formed in a roughly cylindrical shape having a valve seat 22b on the inner circumferential surface and which is inserted into the insert piece hole 21d in a detachable manner; a spill valve body 23 which is formed on the outer circumferential surface in a roughly columnar shape having a seal surface 23b capable of seating on the valve seat 22b, and which is inserted into the insert piece 22 in a slidable manner; and a securing means securing hole 21h, notched part 22h, securing screw 26 for securing the position of the insert piece in the periphery of the axial center relative to the insert piece hole 21d.

## Description

### Technical Field

The present invention relates to an art of a fuel injection pump provided in a diesel engine.

### Background Art

Conventionally, a fuel injection pump provided in a large diesel engine is known in which timing of fuel injection and number of fuel injection are controlled corresponding to driving state of the engine so as to improve fuel efficiency and to reduce exhaust gas emission. In the fuel injection pump, an electromagnetic spill valve is opened and closed in optional timing so as to perform fuel injection with high accuracy.

In the fuel injection pump, a spill valve body of the electromagnetic spill valve is opened and closed corresponding to driving state of the engine intricately and rapidly, whereby large shock and big friction are caused continuously when a sealing surface of the spill valve body is seated on a valve seat formed in a housing of the electromagnetic spill valve. Accordingly, for improving wear resistance of the sealing surface and the valve seat, the whole spill valve body and housing must be configured by materials with high intensity, thereby increasing a production cost.

Then, an art is proposed that a valve seat sleeve (insert piece) having a spill valve body (valve body) and a valve seat (valve seat part) is formed by materials with high intensity and press-inserted into a housing formed by normal materials so as to improve wear resistance and suppress increase of a production cost. For example, an art of the Patent Literature 1 is so.

However, in the art disclosed in the Patent Literature 1, when the insert piece is not press-inserted at a suitable position, or when processing accuracy of the housing or the insert piece is not suitable so that the insert piece is moved in the housing, a fuel path formed in the housing may not be communicated with a fuel path formed in the insert piece, thereby cutting off the fuel paths.

### Prior Art Reference

### Patent Literature

Patent Literature 1: the Japanese Patent Laid Open Gazette Hei. 11-294297

### Disclosure of Invention

### Problems to Be Solved by the Invention

The present invention is provided in consideration of the conditions as mentioned above, and the purpose of the invention is to provide a fuel injection pump in which a position of a fuel path of a housing can be matched easily to a position of a fuel path of an insert piece and the insert piece can be secured in the housing so as not to be rotatable.

### Means for Solving the Problems

According to the present invention, in a fuel injection pump having an electromagnetic spill valve, the electromagnetic spill valve includes a housing in which an insert piece hole is formed, an insert piece formed substantially like a cylinder whose inner peripheral surface is provided therein with a valve seat and inserted detachably into the insert piece hole, a spill valve body formed substantially like a cylinder whose outer peripheral surface is provided therein with a seal surface which can be seated on the valve seat and inserted slidably into the insert piece, and a securing means securing a position of the insert piece concerning the insert piece hole around an axis.

According to the present invention, the securing means includes a securing hole communicated with the insert piece hole from a side surface of the housing, a notched part formed in an outer peripheral surface of the insert piece facing the securing hole, and a securing member inserted into the securing hole and the notched part.

According to the present invention, the securing means includes a housing side notched part formed in an inner peripheral surface of the insert piece hole, an insert piece side notched part formed in an outer peripheral surface of the insert piece facing the housing side notched part, a securing member inserted into the housing side notched part and the insert piece side notched part, and a sealing member sealing the insert piece and the securing member to an inside of the housing.

According to the present invention, the securing means includes a housing side flat surface part formed in an inner peripheral surface of the insert piece hole, and an insert piece side flat surface part formed in an outer peripheral surface of the insert piece facing the housing side flat surface part.

### Effect of the Invention

The present invention configured as the above brings the following effects.

According to the present invention, the insert piece can be attached to the housing while being rotatable in the insert piece hole. Accordingly, a position of the fuel path of the housing can be matched easily to a position of the fuel path of the insert piece, and the insert piece can be secured in the housing by the securing means so as not to be rotatable.

According to the present invention, the insert piece is secured to a predetermined position of the housing by the securing member. Accordingly, a position of the fuel path of the housing can be matched easily to a position of the fuel path of the insert piece, and the insert piece can be secured in the housing by the securing means so as not to be rotatable.

According to the present invention, the insert piece is secured by the securing means configured between the insert piece hole and the insert piece. Accordingly, the securing means is sealed in an inside of the housing and is not exposed outside, whereby oil leak from the securing means can be prevented. A position of the fuel path of the housing can be matched easily to a position of the fuel path of the insert piece, and the insert piece can be secured in the housing by the securing means so as not to be rotatable.

According to the present invention, the insert piece is secured to a predetermined position of the housing without any securing member. Accordingly, it is not necessary to provide the securing member, whereby number of assembly processes can be reduced. A position of the fuel path of the housing can be matched easily to a position of the fuel path of the insert piece, and the insert piece can be secured in the housing by the securing means so as not to be rotatable.

### Brief Description of Drawings

[Fig. 1] Fig. 1 is a sectional view of a part of a fuel injection pump according to a first embodiment of the present invention.
[Fig. 2] Fig. 2(a) is an enlarged sectional view of an electromagnetic spill valve part of a fuel injection pump according to a second embodiment of the present invention. Fig. 2(b) is an arrow sectional view of the line C-C in Fig. 2(a).
[Fig. 3] Fig. 3(a) is an enlarged sectional view of an electromagnetic spill valve part of the fuel injection pump according to the first embodiment of the present invention which shows flow of fuel when the electromagnetic spill valve is closed. Fig. 3(b) is an enlarged sectional view of the electromagnetic spill valve part of the fuel injection pump according to the first embodiment of the present invention which shows the flow of fuel when the electromagnetic spill valve is opened.
[Fig. 4] Fig. 4(a) is an enlarged sectional view of the electromagnetic spill valve part of the fuel injection pump according to the second embodiment of the present invention. Fig. 4(b) is an arrow sectional view of the line D-D in Fig. 4(a).
[Fig. 5] Fig. 5(a) is an enlarged sectional view of an electromagnetic spill valve part of a fuel injection pump according to a third embodiment of the present invention. Fig. 5(b) is a perspective view of an insert piece according to the third embodiment of the present invention. Fig. 5(c) is an arrow sectional view of the line E-E in Fig. 5(a).
[Fig. 6] Fig. 6(a) is an enlarged sectional view of an electromagnetic spill valve part of a fuel injection pump of another embodiment. Fig. 6(b) is perspective view of an insert piece of this embodiment. Fig. 6(c) is an arrow sectional view of the line F-F in Fig. 6(a).

### Detailed Description of the Invention

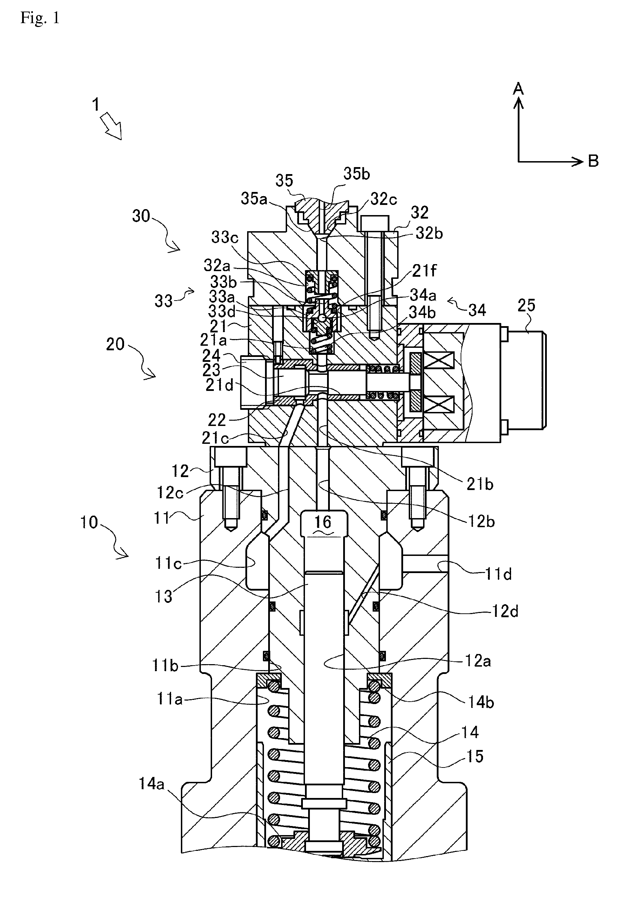

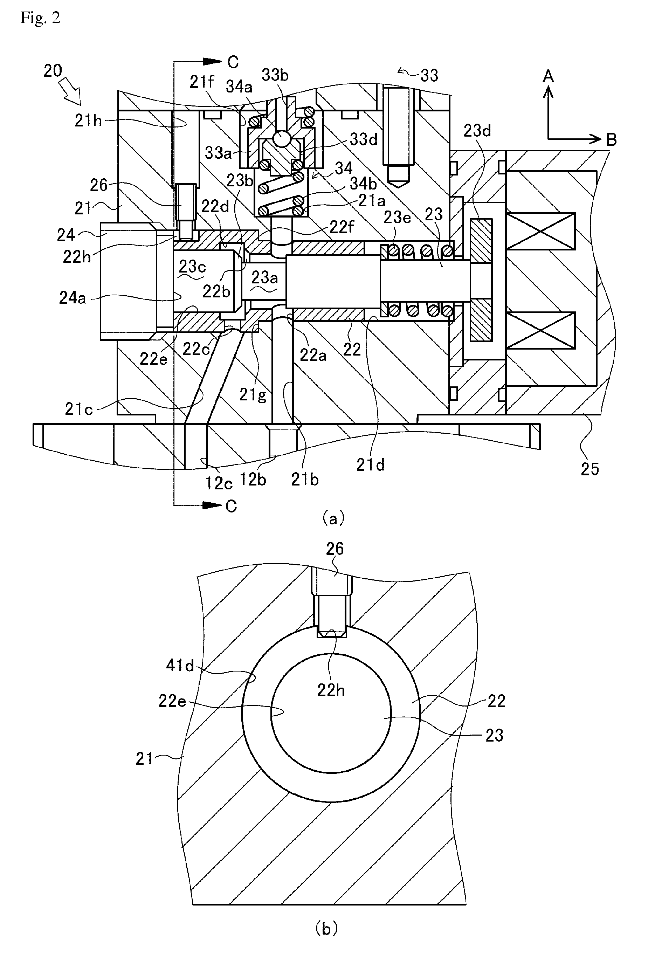

Next, an explanation will be given on a fuel injection pump 1 which is a first embodiment of the present invention referring to Figs. 1 and 2. Herein, a direction of an arrow A is regarded as an upward direction so as to define the vertical direction, and a direction of an arrow B is regarded as a rightward direction so as to define the lateral direction.

As shown in Fig. 1, the fuel injection pump 1 is connected to a low pressure pump (feed pump) (not shown), and pressurizes fuel from the low pressure pump and supplies the fuel to a fuel injection nozzle (not shown). The fuel injection pump 1 has a pump body part 10, an electromagnetic spill valve 20 and a two-way delivery valve part 30.

The pump body part 10 includes a pump body upper part 11, a barrel 12, a plunger 13, a plunger spring 14, a tappet 15, a cam (not shown) and the like.

The pump body upper part 11 is formed substantially cylindrical and is secured to an upper part of a pump body lower part (not shown). In an axial part of a lower end surface of the pump body upper part 11, a plunger spring chamber 11a is formed in which the plunger spring 14 and the tappet 15 are provided and whose lower side is opened. In an axial part of an upper end surface of the pump body upper part 11, a barrel holding hole 11b is formed which holds the barrel 12 and whose upper side is opened. The barrel holding hole 11b is communicated with the plunger spring chamber 11a in the pump body upper part 11. In a vertical middle part of the barrel holding hole 11b of the pump body upper part 11, a circular diameter-expanded part is formed. The circular diameter-expanded part constitutes an outer side surface of a fuel supply/exhaust chamber 11c. In an outer peripheral surface of the pump body upper part 11, a fuel supply port 11d is formed so as to be communicated with the fuel supply/exhaust chamber 11c. The fuel supply port 11d is connected to the low pressure pump (not shown).

In the barrel 12, the plunger 13 is provided so as to be slidable along an axial direction, that is, along the vertical direction. The barrel 12 is formed substantially cylindrical and inserted into the barrel holding hole 11b of the pump body upper part 11 snugly so that upper and lower ends of the barrel 12 are projected vertically from the barrel holding hole 11b. In an axial part of the barrel 12, a plunger hole 12a is formed in which the plunger 13 is provided and whose lower end is opened. In the axial part of the barrel 12, at a side upper than the plunger hole 12a, a first fuel supply path 12b is formed so as to be extended vertically. The first fuel supply path 12b is communicated with the plunger hole 12a. At the upper end of the barrel 12, a flange is formed so as to be projected radially.

The barrel 12 is secured via the flange to an upper end of the pump body upper part 11 by bolts or the like while being inserted in the barrel holding hole 11b. Accordingly, the circular diameter-expanded part of the barrel holding hole 11b and an outer peripheral surface of the barrel 12 constitute the fuel supply/exhaust chamber 11c. In a side of the barrel 12 outer than the first fuel supply path 12b in a radial direction, a first spill oil exhaust path 12c is formed substantially vertically. The first spill oil exhaust path 12c is communicated with the fuel supply/exhaust chamber 11c of the pump body upper part 11.

The plunger 13 pressurizes the fuel. The plunger 13 is formed substantially cylindrical and inserted into the plunger hole 12a snugly so as to be slidable vertically. A pressurizing chamber 16 is formed by an upper end surface of the plunger 13 and the plunger hole 12a. The pressurizing chamber 16 is communicated with the fuel supply/exhaust chamber 11c via a suction path 12d formed in the barrel 12.

The plunger spring 14 is a compression spring and biases the plunger 13 downward. The plunger spring 14 is arranged in a lower part of the plunger 13 while an expansion/contraction direction of the plunger spring 14 is in agreement with the vertical direction. A lower end of the plunger spring 14 is supported by the plunger 13 via a plunger spring receiver 14a, and an upper end of the plunger spring 14 contacts the pump body upper part 11 via a plunger spring receiver 14b. Namely, the plunger spring 14 biases the plunger 13 downward from the pump body upper part 11.

The tappet 15 transmits pressing force from the cam (not shown) to the plunger 13. The tappet 15 is formed like a bottomed cylinder and inserted into the plunger spring chamber 11a snugly so as to be slidable vertically. Inside the tappet 15, the lower part of the plunger 13, a lower part of the plunger spring 14, and the plunger spring receiver 14a are arranged. A roller (not shown) is supported rotatably at a bottom of the tappet 15 so as to face the cam arranged below. The tappet 15 contacts the cam via the roller by biasing force of the plunger spring 14. The tappet 15 receives the pressing force from the cam via the roller and transmits it to the plunger 13. Accordingly, the plunger 13 is moved vertically following rotation of the cam.

The electromagnetic spill valve 20 adjusts fuel injection amount and injection timing of the fuel injection pump 1. The electromagnetic spill valve 20 has a housing 21, an insert piece 22, a spill valve body 23, a stopper 24, a solenoid 25 and the like.

The housing 21 is a structure constituting a body part of the electromagnetic spill valve 20. The housing 21 is formed in a substantially rectangular parallelepiped shape. In an upper part of the housing 21, a two-way delivery valve spring chamber 21a is formed vertically. The two-way delivery valve spring chamber 21a is expanded radially upward from a middle part of the two-way delivery valve spring chamber 21a so as to form a discharge valve chamber 21f. In a lower part of the housing 21, a second fuel supply path 21b is formed vertically. The second fuel supply path 21b is formed so as to be communicated with the two-way delivery valve spring chamber 21a via a lower surface of the housing 21. A diameter of the two-way delivery valve spring chamber 21a is larger than that of the second fuel supply path 21b.

As shown in Fig. 2, in a vertical middle part of the housing 21, an insert piece hole 21d is formed so as to penetrate the housing 21 laterally. The insert piece hole 21d crosses and is communicated with the second fuel supply path 21b. Accordingly, the insert piece hole 21d is communicated with the two-way delivery valve spring chamber 21a via the second fuel supply path 21b. A part of the insert piece hole 21d on the right of a middle part thereof, which is on the left of the second fuel supply path 21b, is contracted radially so as to form a stepped part 21g. A female thread part is formed in a left end of the insert piece hole 21d.

In a part on the left of the second fuel supply path 21b of the housing 21, a second spill oil exhaust path 21c is formed vertically. The second spill oil exhaust path 21c is communicated with the insert piece hole 21d. The housing 21 is secured to the barrel 12 by bolts or the like while a lower end surface of the housing 21 touches closely an upper end surface of the barrel 12. The second fuel supply path 21b is communicated with the first fuel supply path 12b of the barrel 12, and the second spill oil exhaust path 21c is communicated with the first spill oil exhaust path 12c of the barrel 12.

In the housing 21, a securing hole 21h is formed which constitutes a securing means securing the insert piece 22. The securing hole 21h is communicated with the insert piece hole 21d via a part of an upper surface of the housing 21 on the left of the second fuel supply path 21b. A female thread part is formed in a lower part of the securing hole 21h. A securing screw 26 which is a securing member constituting the securing means is inserted into the securing hole 21h and arranged in the female thread part. The position at which the securing hole 21h is not limited to that of this embodiment and may be another position which is communicated with the insert piece hole 21d.

The insert piece 22 is a member on which the spill valve body 23 is seated. The insert piece 22 is formed substantially like a cylinder whose total length is shorter than the insert piece hole 21d. A part of the insert piece 22 from a middle part thereof is contracted radially so as to form a stepped part 22f. The insert piece 22 is inserted into the insert piece hole 21d snugly and detachably so that the stepped part 22f contacts the stepped part 21g of the insert piece hole 21d. A left end of the insert piece 22 is biased by the stopper 24 and is provided inside the insert piece hole 21d. A fuel supply hole 22a is formed in a part of the insert piece 22, which faces the second fuel supply path 21b when the insert piece 22 is provided inside the insert piece hole 21d, so as to penetrate an inner perimeter of the insert piece 22.

In an outer peripheral part of a diameter-expanded side (left side) of the stepped part 22f of the insert piece 22, a notched part 22h constituting the securing means is formed at a position facing the securing hole 21h of the housing 21. The notched part 22h is formed at a depth not communicated with the inner perimeter of the insert piece 22 with a width substantially the same as a diameter of the securing screw 26. The securing screw 26 secured to the female thread part of the securing hole 21h is inserted into the notched part 22h. Namely, the insert piece 22 is secured to an inside of the insert piece hole 21d by the securing means (the securing hole 21h, the securing screw 26 and the notched part 22h). Accordingly, it is not necessary to press-inserting the insert piece 22 into the insert piece hole 21d for securing.

The inner perimeter of the insert piece 22 is diameter-expanded at the left of the fuel supply hole 22a so as to form a first diameter-expanded part 22d. In an inner peripheral surface of the insert piece 22, a valve seat 22b is provided at a right end of the first diameter-expanded part 22d which is tapered so as to be diameter-expanded leftward continuously. Furthermore, the inner perimeter of the insert piece 22 is diameter-contracted at the left of the first diameter-expanded part 22d so as to form a second diameter-expanded part 22e. The inner diameter of the first diameter-expanded part 22d is larger than that of the second diameter-expanded part 22e. In a part of the first diameter-expanded part 22d of the insert piece 22 facing the second spill oil exhaust path 21c of the housing 21, a spill oil exhaust port 22c is formed so as to penetrate the inner perimeter of the insert piece 22.

The spill valve body 23 switches a passage of fuel pressingly sent in the second fuel supply path 21b. The spill valve body 23 is slidably inserted into the insert piece 22. A diameter-contracted part 23a whose diameter is smaller than that of the spill valve body 23 is provided in a part of the spill valve body 23 crossing the fuel supply hole 22a of the insert piece 22 when the spill valve body 23 is inserted into the insert piece 22. Accordingly, a space is formed between the spill valve body 23 and the insert piece 22, whereby a flow of fuel in the second fuel supply path 21b over the insert piece 22 is not blocked. In the spill valve body 23, at a left end of the diameter-contracted part 23a, a seal surface 23b is provided which is tapered so as to be diameter-expanded leftward. The seal surface 23b can be seated snugly on the valve seat 22b of the insert piece 22.

A part of the spill valve body 23 between a left end surface thereof and the seal surface 23b is diameter-expanded so as to form a diameter-expanded part 23c whose diameter is substantially the same as the inner diameter of the second diameter-expanded part 22e of the insert piece 22. A part of the spill valve body 23 at the right of the diameter-contracted part 23a is inserted slidably into the insert piece 22, and the diameter-expanded part 23c is inserted slidably into the second diameter-expanded part 22e of the insert piece 22. Namely, more than half of a length in an axial direction of the spill valve body 23 is inserted into only the insert piece 22 provided inside the housing 21, and the spill valve body 23 is guided by only the insert piece 22 when the spill valve body 23 is slid. The spill valve body 23 is biased leftward by a spill valve spring 23e provided inside a right end of the insert piece hole 21d. In a right end of the spill valve body 23, an armature 23d including a magnetic body is disposed.

The stopper 24 restricts sliding of the spill valve body 23. The stopper 24 has a contact surface 24a at a right end surface thereof and is formed substantially cylindrical so as to be able to be secured to the insert piece hole 21d of the housing 21. The stopper 24 is inserted rightward into the insert piece hole 21d of the housing 21 so that the contact surface 24a contacts a left end surface of the insert piece 22 provided inside the insert piece hole 21d. Accordingly, the stopper 24 secures the insert piece 22 so that the insert piece 22 cannot be moved in the insert piece hole 21d along an axial direction. The stopper 24 is configured so that a left end of the spill valve body 23 touches the contact surface 24a when the spill valve body 23 is slid leftward. Accordingly, the stopper 24 can restrict a sliding amount of the spill valve body 23.

The solenoid 25 generates magnetic force. The solenoid 25 is secured to the housing 21 so that an adsorption surface faces the armature 23d disposed in the spill valve body 23. By receiving a signal from a control device (not shown), the solenoid 25 generates the magnetic force so as to adsorb the armature 23d disposed in the spill valve body 23. Accordingly, the solenoid 25 slides the spill valve body 23 rightward based on the signal from the control device (not shown).

According to the above, in the electromagnetic spill valve 20, when the spill valve body 23 is slid leftward by the spill valve spring 23e, the seal surface 23b of the spill valve body 23 is separated from the valve seat 22b of the insert piece 22. As a result, the second fuel supply path 21b is communicated with the second spill oil exhaust path 21c via the fuel supply hole 22a, an inside of the first diameter-expanded part 22d and the spill oil exhaust port 22c of the insert piece 22.

On the other hand, when the spill valve body 23 is slid rightward by the solenoid 25 oppositely to biasing force of the spill valve spring 23e, the seal surface 23b of the spill valve body 23 is seated on the valve seat 22b of the insert piece 22. As a result, the communication of the second fuel supply path 21b and the second spill oil exhaust path 21c is cut off.

As shown in Fig. 1, the two-way delivery valve part 30 discharges fuel and maintains pressure of fuel in a high pressure pipe joint 35 after finishing the injection to a predetermined value. The two-way delivery valve part 30 has a two-way delivery valve body 32, a discharge valve 33, a two-way delivery valve 34 and the like. The two-way delivery valve part 30 is connected to the high pressure pipe joint 35.

The two-way delivery valve body 32 is formed like a cylinder whose lower end surface has substantially the same shape as an upper end surface of the housing 21. The two-way delivery valve body 32 is secured to the housing 21 by bolts or the like while the lower end surface of the two-way delivery valve body 32 contacts snugly the upper end surface of the housing 21. In a lower part of the two-way delivery valve body 32, a discharge valve spring chamber 32a is formed vertically and arranged oppositely to the discharge valve chamber 21f. The discharge valve spring chamber 32a is communicated with the two-way delivery valve spring chamber 21a and the discharge valve chamber 21f. In an inner peripheral surface of an upper part of the two-way delivery valve body 32, a circular seal surface 32c is formed which is shaped like a funnel diameter-contracted downward continuously so as to fasten the high pressure pipe joint 35 tightly. In a vertical middle part of the two-way delivery valve body 32, a discharge port 32b is opened. The discharge valve spring chamber 32a is communicated with the outside via the discharge port 32b.

As shown in Figs. 1 and 2, the discharge valve 33 discharges fuel via the discharge port 32b. The discharge valve 33 includes a discharge valve body 33a and a discharge valve spring 33c. The discharge valve body 33a is formed substantially cylindrical and provided inside the discharge valve chamber 21f so that a space through which fuel with high pressure can pass is formed between the discharge valve body 31 and an inner peripheral surface of the discharge valve chamber 21f. The discharge valve spring 33c is provided inside the discharge valve chamber 21f above the discharge valve body 33a. The discharge valve body 33a is biased downward by the discharge valve spring 33c so that a lower end surface of the discharge valve body 33a is seated on a lower end surface of the discharge valve chamber 21f. In a lower part of the discharge valve body 33a, a recess opened downward is formed. An inside of the recess is a two-way delivery valve chamber 33d. In an upper part of the discharge valve body 33a, a two-way delivery valve path 33b is formed vertically. A lower side of the two-way delivery valve path 33b is communicated with the two-way delivery valve chamber 33d, and an upper side thereof is communicated with the discharge valve spring chamber 32a.

The two-way delivery valve 34 opens and closes the two-way delivery valve path 33b. The two-way delivery valve 34 includes a two-way delivery valve body 34a and a two-way delivery valve spring 34b. The two-way delivery valve body 34a includes a ball and a receiver. The receiver is provided inside the two-way delivery valve chamber 33d so that a space through which fuel can pass is formed between the receiver and an inner peripheral surface of the two-way delivery valve chamber 33d. The ball is arranged on the receiver so as to be seated on an opening of the two-way delivery valve path 33b opened in an upper surface of the two-way delivery valve chamber 33d. The two-way delivery valve body 34a contacts the two-way delivery valve spring 34b, provided inside the two-way delivery valve spring chamber 21a, with a lower end surface of the receiver, and is biased upward by the two-way delivery valve spring 34b. Accordingly, in the two-way delivery valve 34, by biasing force of the two-way delivery valve spring 34b, the two-way delivery valve body 34a cuts off the communication of the two-way delivery valve chamber 33d and the two-way delivery valve path 33b.

The high pressure pipe joint 35 supplies fuel with high pressure to the fuel injection nozzle (not shown). In an outer peripheral surface of one of sides (a side of the discharge port 32b) of the high pressure pipe joint 35, a circular seal surface 35a is formed which is tapered so as to be diameter-contracted downward continuously. The high pressure pipe joint 35 is attached to the two-way delivery valve body 32 while being pressed so that the seal surface 35a contacts snugly the seal surface 32c of the two-way delivery valve body 32. Inside the high pressure pipe joint 35, a fuel supply path 35b is formed. The fuel supply path 35b is communicated with the discharge port 32b.

The fuel injection pump 1 according to the present invention is a PF type fuel injection pump in which a tappet is provided in an engine. However, the fuel injection pump is not limited thereto and may alternatively be a PFR type fuel injection pump in which a tappet is provided in a fuel injection pump body part, for example.

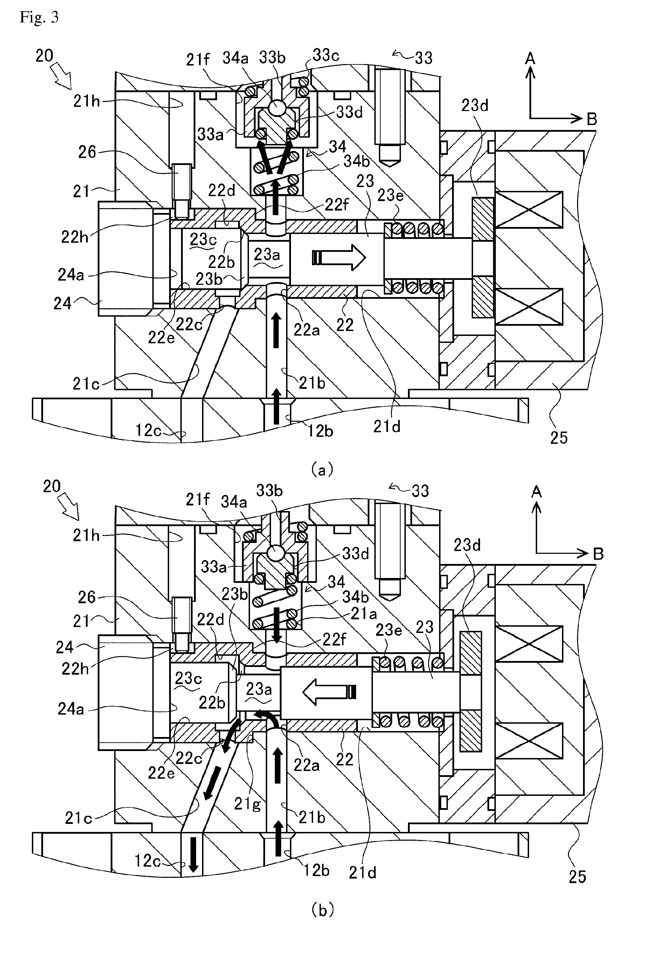

Next, an explanation will be given on an operation mode of the electromagnetic spill valve 20 in the fuel injection pump 1 referring to Fig. 3.

Fuel is supplied to the fuel supply/exhaust chamber 11c via the fuel supply port 11d of the pump body upper part 11 by the low pressure pump (not shown). The fuel supplied into the fuel supply/exhaust chamber 11c is supplied to the pressurizing chamber 16 via the first spill oil exhaust path 12c of the barrel 12 when the plunger 13 falls down. The fuel in the pressurizing chamber 16 is pressurized by the plunger 13 slid upward following rotation of the cam (not shown), and supplied to the pressurizing chamber 16, the first fuel supply path 12b and the second fuel supply path 21b of the housing 21 in this order.

When the fuel injection pump 1 discharges fuel, as shown in Fig. 3(a), the solenoid 25 of the electromagnetic spill valve 20 is excited based on a signal from the control device (not shown). The spill valve body 23 of the electromagnetic spill valve 20 is slid rightward (along a direction of a void arrow) by attracting force of the solenoid 25. Then, the seal surface 23b of the spill valve body 23 is seated on the valve seat 22b of the insert piece 22. As a result, the communication of the second fuel supply path 21b and the second spill oil exhaust path 21c of the housing 21 is cut off, whereby fuel pressure in the second fuel supply path 21b is not released via the second spill oil exhaust path 21c and is maintained. Accordingly, pressurized fuel flows along a direction of a black arrow and the two-way delivery valve spring chamber 21a is filled up with the fuel from the pressurizing chamber 16 (see Fig. 1) via the first fuel supply path 12b and the second fuel supply path 21b. Namely, the electromagnetic spill valve 20 is closed and fuel is enabled to be supplied.

When power applied to the discharge valve body 33a of the discharge valve 33 (the two-way delivery valve body 34a of the two-way delivery valve 34) by fuel pressure in the two-way delivery valve spring chamber 21a becomes larger than biasing force of the discharge valve spring 33c biasing downward the discharge valve body 33a, the discharge valve body 33a is moved upward and separated from the lower end surface of the discharge valve chamber 21f, whereby the discharge valve 33 is opened. At this time, the two-way delivery valve 34 is closed. As a result, pressurized fuel flows from the two-way delivery valve spring chamber 21a to the discharge valve spring chamber 32a and discharged from the discharge valve spring chamber 32a via the discharge port 32b to the fuel supply path 35b of the high pressure pipe joint 35 (see Fig. 1).

When the fuel pressure in the two-way delivery valve spring chamber 21a is released as the above, by the biasing force of the discharge valve spring 33c biasing downward the discharge valve body 33a, the discharge valve body 33a is moved downward and seated on the lower end surface of the discharge valve chamber 21f, whereby the discharge valve 33 is closed. As a result, the fuel is not discharged from the discharge valve spring chamber 32a via the discharge port 32b to the fuel supply path 35b. At this time, pulsation is generated in the fuel pressure remaining between the fuel supply path 35b, positioned downstream the discharge valve 33, and the fuel injection nozzle (not shown). When power applied to the two-way delivery valve body 34a by the generated pulsation of the fuel pressure is larger than the biasing force of the two-way delivery valve spring 34b biasing the two-way delivery valve body 34a upward (toward the discharge port 32b), the two-way delivery valve body 34a is moved downward (oppositely to the discharge port 32b), whereby the two-way delivery valve 34 is opened. Accordingly, the fuel pressure increased by the pulsation is released and reduced to a predetermined value.

When the fuel injection pump 1 stops discharge of fuel, as shown in Fig. 3(b), the solenoid 25 of the electromagnetic spill valve 20 is demagnetized based on a signal from the control device (not shown). By biasing force of the spill valve spring 23e, the spill valve body 23 of the electromagnetic spill valve 20 is slid leftward (along a direction of a void arrow) until the spill valve body 23 contacts the contact surface 24a of the stopper 24. Then, the seal surface 23b of the spill valve body 23 is separated from the valve seat 22b of the insert piece 22. As a result, the second fuel supply path 21b and the second spill oil exhaust path 21c of the housing 21 are communicated with each other, whereby fuel pressure in the second fuel supply path 21b is released via the second spill oil exhaust path 21c. Accordingly, fuel flows from the second fuel supply path 21b to the fuel supply hole 22a, the inside of the first diameter-expanded part 22d and the spill oil exhaust port 22c of the insert piece 22, and the second spill oil exhaust path 21c in this order along a black arrow, and then discharged via the first spill oil exhaust path 12c to the fuel supply/exhaust chamber 11c, and is not discharged to the fuel supply path 35b of the high pressure pipe joint 35. Namely, the electromagnetic spill valve 20 is opened and fuel cannot be supplied.

At this time, the insert piece 22 is secured to the inside of the insert piece hole 21d of the housing 21 by the securing means (the securing hole 21h, the securing screw 26 and the notched part 22h) so as not to be rotatable around an axis in the insert piece hole 21d. Accordingly, the second fuel supply path 21b is not blocked by the insert piece 22.

As the above, the fuel injection pump 1, which is the first embodiment of the fuel injection pump according to the present invention, has the electromagnetic spill valve 20. The electromagnetic spill valve 20 has the housing 21 in which the insert piece hole 21d is formed, the insert piece 22 formed substantially like a cylinder whose inner peripheral surface is provided therein with the valve seat 22b and inserted detachably into the insert piece hole 21d, the spill valve body 23 formed substantially like a cylinder whose outer peripheral surface is provided therein with the seal surface 23b which can be seated on the valve seat 22b and inserted slidably into the insert piece 22, and the securing means securing the position of the insert piece 22 around the axis concerning the insert piece hole 21d.

According to the configuration, the insert piece 22 can be attached to the housing 21 while being rotatable in the insert piece hole 21d. Accordingly, a position of the second fuel supply path 21b of the housing 21 can be matched easily to a position of the fuel supply hole 22a which is a fuel path of the insert piece 22, and the insert piece 22 can be secured in the housing 21 by the securing means so as not to be rotatable.

The securing means includes the securing hole 21h communicated with the insert piece hole 21d from a side surface of the housing 21, the notched part 22h formed in the outer peripheral surface of the insert piece 22 facing the securing hole 21h, and the securing screw 26 which is the securing member inserted into the securing hole 21h and the notched part 22h.

According to the configuration, the insert piece 22 is secured to a predetermined position of the housing 21 by the securing screw 26 which is the securing member. Accordingly, a position of the second fuel supply path 21b of the housing 21 can be matched easily to a position of the fuel supply hole 22a which is a fuel path of the insert piece 22, and the insert piece 22 can be secured in the housing 21 by the securing means so as not to be rotatable.

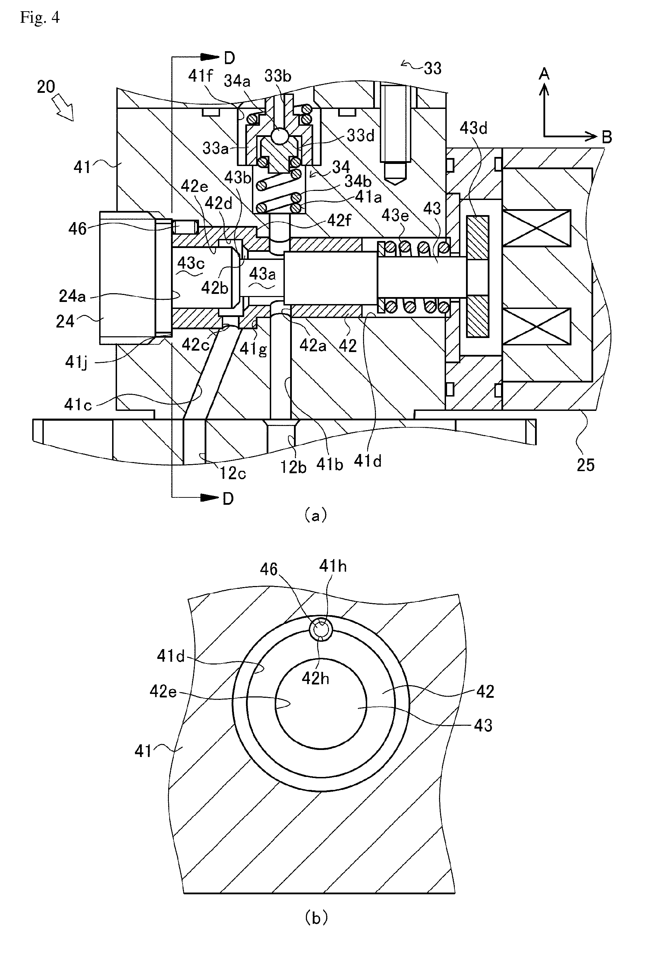

An explanation will be given on an electromagnetic spill valve 40 of the fuel injection pump 1 which is a second embodiment of the fuel injection pump according to the present invention referring to Fig. 4. In below embodiment, concrete explanations of points the same as the first embodiment explained above are omitted, and points different from the first embodiment are mainly explained.

The electromagnetic spill valve 40 opens and closes the first spill oil exhaust path 12c and a second spill oil exhaust path 41c for releasing fuel compressed in the pressurizing chamber 16 to the fuel supply/exhaust chamber 11c of a low pressure side so as to control fuel injection of the fuel injection pump 1. The electromagnetic spill valve 40 has a housing 41, an insert piece 42, a spill valve body 43, the stopper 24, the solenoid 25 and the like.

The housing 41 is a structure constituting a body part of the electromagnetic spill valve 40. The housing 41 is formed in a substantially rectangular parallelepiped shape. In a vertical middle part of the housing 41, an insert piece hole 41d is formed so as to penetrate the housing 41 laterally. A part of the insert piece hole 41d on the left of a middle part thereof, which is on the left of a second fuel supply path 41b, is contracted radially so as to form a middle stepped part 41g. A left stepped part 41j is formed by contracting radially the insert piece hole 41d rightward from a left end thereof. A female thread part is formed in the diameter-expanded part.

Furthermore, in the housing 41, as shown in Fig. 4(b), a housing side notched part 41h is formed which constitutes a securing means securing the insert piece 42. The housing side notched part 41h is formed rightward from the left stepped part 41j of the insert piece hole 41d at a depth not communicated with the second fuel supply path 41b so that a section in an axial direction of the insert piece hole 41d is formed substantially like a semicircle.

The insert piece 42 is a member on which the spill valve body 43 is seated. A part of the insert piece 42 from a middle part thereof is contracted radially so as to form a stepped part 42f. The insert piece 42 is inserted into the insert piece hole 41d snugly and detachably so that the stepped part 42f contacts the middle stepped part 41g of the insert piece hole 41d.

In an outer perimeter of a diameter-expanded side (left side) of the stepped part 42f of the insert piece 42, at a position facing the housing side notched part 41h of the housing 41, an insert piece side notched part 42h is formed which constitutes the securing means. The insert piece side notched part 42h is formed at a depth not communicated with the inner perimeter thereof so that a section in an axial direction of the insert piece 42 is formed substantially like a semicircle. Namely, the insert piece side notched part 42h is formed so that the housing side notched part 41h and the insert piece side notched part 42h constitute a pin hole part whose section in an axial direction is formed circularly. The securing means is not limited to that having a securing pin 46 whose section is circular shaped, and any securing means is available if the insert piece 42 is secured to an inside of the insert piece hole 41d (for example, a securing key whose section is rectangular shaped).

The securing pin 46 which is a securing member constituting the securing means is inserted into the housing side notched part 41h and the insert piece side notched part 42h. Namely, the insert piece 42 is secured to the inside of the insert piece hole 41d by the securing means (the housing side notched part 41h, the insert piece side notched part 42h and the securing pin 46). Then, the stopper 24 is attached to the diameter-expanded part of the housing 41 in which the left stepped part 41j is formed.

Accordingly, the insert piece 42 can be secured without being press-inserted into the insert piece hole 41d. Since the insert piece 42 is secured to the inside of the insert piece hole 41d of the housing 41 by the securing means (the housing side notched part 41h, the insert piece side notched part 42h and the securing pin 46), the insert piece 42 is not rotated around an axis in the insert piece hole 41d. Furthermore, by the stopper 24, the insert piece 42 and the securing pin 46 are secured to the inside of the housing 41 while being sealed.

As the above, the securing means of the electromagnetic spill valve 40 of the fuel injection pump 1, which is the second embodiment of the fuel injection pump according to the present invention, includes the housing side notched part 41h formed in an inner peripheral surface of the insert piece hole 41d, the insert piece side notched part 42h formed in an outer peripheral surface of the insert piece 42 facing the housing side notched part 41h, the securing pin 46 which is the securing member inserted into the housing side notched part 41h and the insert piece side notched part 42h, and the stopper 24 which is a sealing member sealing the insert piece 42 and the securing pin 46 to the inside of the housing 41.

According to the configuration, the insert piece 42 is secured by the securing pin 46 which is the securing means configured between the insert piece hole 41d and the insert piece 42. Accordingly, the securing pin 46 is sealed in an inside of the housing 41 by the stopper 24 and is not exposed outside, whereby oil leak from the securing pin 46 can be prevented. A position of the second fuel supply path 41b of the housing 41 can be matched easily to a position of a fuel supply hole 42a which is a fuel path of the insert piece 42, and the insert piece 42 can be secured in the housing 41 by the securing means so as not to be rotatable.

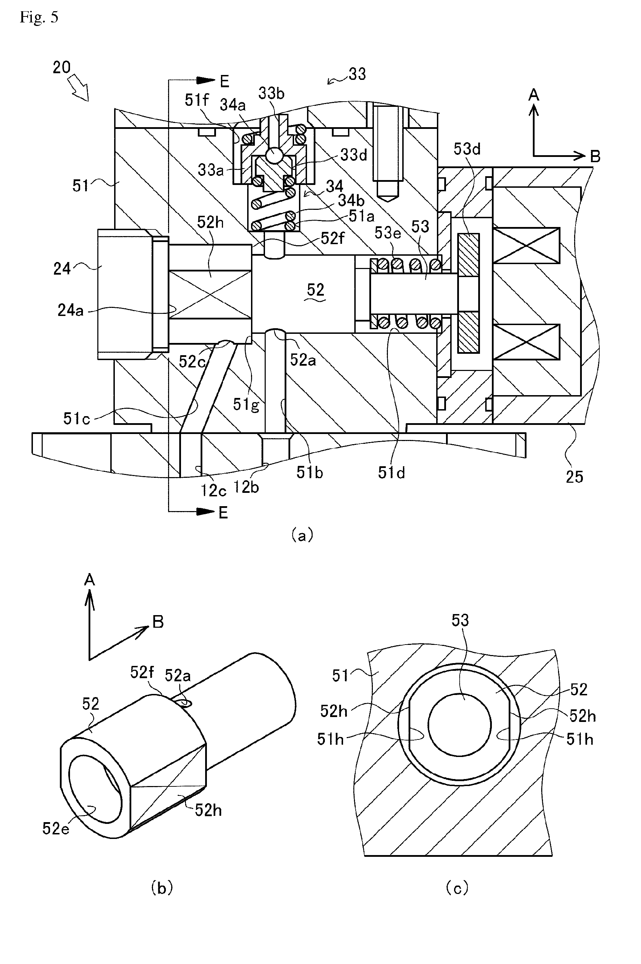

An explanation will be given on an electromagnetic spill valve 50 of the fuel injection pump 1 which is a third embodiment of the fuel injection pump according to the present invention referring to Fig. 5. In below embodiment, concrete explanations of points the same as the first embodiment explained above are omitted, and points different from the first embodiment are mainly explained.

The electromagnetic spill valve 50 opens and closes the first spill oil exhaust path 12c and a second spill oil exhaust path 51c for releasing fuel compressed in the pressurizing chamber 16 to the fuel supply/exhaust chamber 11c of a low pressure side so as to control fuel injection of the fuel injection pump 1. The electromagnetic spill valve 50 has a housing 51, an insert piece 52, a spill valve body 53, the stopper 24, the solenoid 25 and the like.

The housing 51 is a structure constituting a body part of the electromagnetic spill valve 50. The housing 51 is formed in a substantially rectangular parallelepiped shape. In a vertical middle part of the housing 51, an insert piece hole 51d is formed so as to penetrate the housing 51 laterally. In the insert piece hole 51d, on the left of a second fuel supply path 51b, housing side flat surface parts 51h are formed which constitute a securing means securing the insert piece 52. The housing side flat surface parts 51h are formed by shaping parts of an inner side surface of the insert piece hole 51d facing each other to be flat surfaces. At this time, a distance between the housing side flat surface parts 51h facing each other is smaller than a diameter of the insert piece hole 51d (see Fig. 5(c)).

The insert piece 52 is a member on which the spill valve body 53 is seated. A part of the insert piece 52 from a middle part thereof is contracted radially so as to form a stepped part 52f. The insert piece 52 is inserted into the insert piece hole 51d snugly and detachably so that the stepped part 52f contacts the stepped part 51g of the insert piece hole 51d. In an outer perimeter of a diameter-expanded side (left side) of the stepped part 52f of the insert piece 52, at positions facing the housing side flat surface parts 51h of the housing 51, insert piece side flat surface parts 52h are formed resperctively which constitute the securing means.

The insert piece 52 is inserted into the insert piece hole 51d so that the insert piece side flat surface parts 52h contact the housing side flat surface parts 51h snugly. Namely, the insert piece 52 is secured to the inside of the insert piece hole 51d by the securing means (the housing side flat surface parts 51h and the insert piece side flat surface parts 52h). Accordingly, the insert piece 52 can be secured without being press-inserted into the insert piece hole 51d. In this embodiment, the two insert piece side flat surface parts 52h are provided at positions whose phases are different for 180°. However, the number of the insert piece side flat surface parts 52h may alternatively be one, or three or more.

Since the insert piece 52 is secured to the inside of the insert piece hole 51d of the housing 51 by the securing means (the housing side flat surface parts 51h and the insert piece side flat surface parts 52h), the insert piece 52 is not rotated around an axis in the insert piece hole 51d.

As the above, the securing means of the electromagnetic spill valve 50 of the fuel injection pump 1, which is the second embodiment of the fuel injection pump according to the present invention, includes the housing side flat surface parts 51h formed in the inner peripheral surface of the insert piece hole 51d, and the insert piece side flat surface parts 52h formed in the outer peripheral surface of the insert piece 52 facing the housing side flat surface parts 51h.

According to the configuration, the insert piece 52 is secured to a predetermined position of the housing 51 without any securing member. Accordingly, it is not necessary to provide the securing member, whereby number of assembly processes can be reduced. A position of the second fuel supply path 51b of the housing 51 can be matched easily to a position of a fuel supply hole 52a which is a fuel path of the insert piece 52, and the insert piece 52 can be secured in the housing 51 so as not to be rotatable.

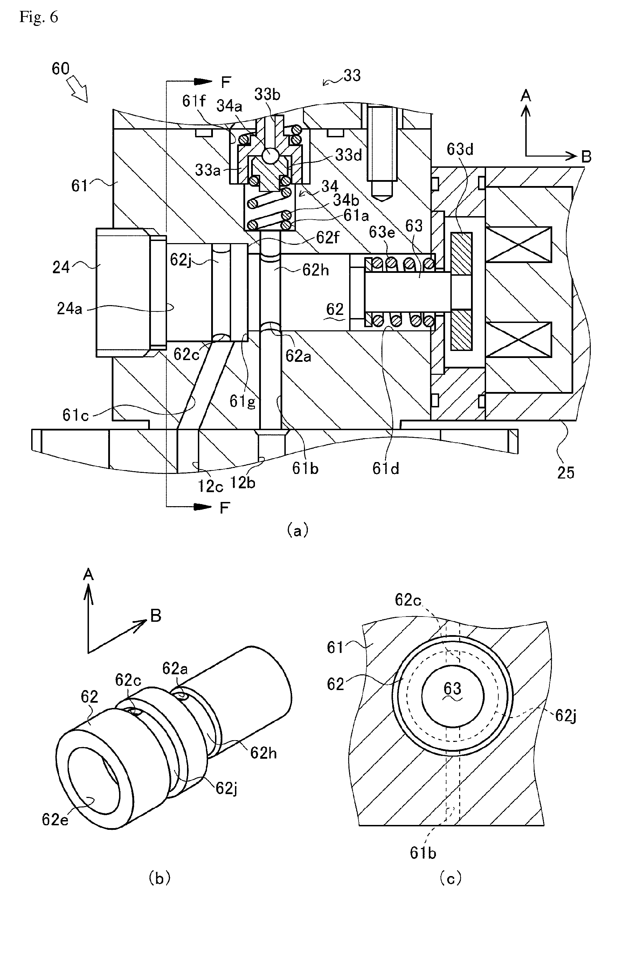

An explanation will be given on an electromagnetic spill valve 60 of the fuel injection pump 1 which is another embodiment of the fuel injection pump according to the present invention referring to Fig. 6. In the electromagnetic spill valve 60 of this embodiment, it is not necessary to secure rotation of an insert piece around an axis and to adjust a position of the insert piece. In below embodiment, concrete explanations of points the same as the first embodiment explained above are omitted, and points different from the first embodiment are mainly explained.

The electromagnetic spill valve 60 opens and closes the first spill oil exhaust path 12c and a second spill oil exhaust path 61c for releasing fuel compressed in the pressurizing chamber 16 to the fuel supply/exhaust chamber 11c of a low pressure side so as to control fuel injection of the fuel injection pump 1. The electromagnetic spill valve 60 has a housing 61, an insert piece 62, a spill valve body 63, the stopper 24, the solenoid 25 and the like.

The housing 61 is a structure constituting a body part of the electromagnetic spill valve 60. The housing 61 is formed in a substantially rectangular parallelepiped shape. In a vertical middle part of the housing 61, an insert piece hole 61d is formed so as to penetrate the housing 61 laterally.

The insert piece 62 is a member on which the spill valve body 63 is seated. A part of the insert piece 62 from a middle part thereof is contracted radially so as to form a stepped part 62f. The insert piece 62 is inserted into the insert piece hole 61d snugly and detachably so that the stepped part 62f contacts the stepped part 61g of the insert piece hole 61d.

In an outer peripheral surface of the insert piece 62 facing a second fuel supply path 61b in the insert piece hole 61d, a fuel supply groove 62h is formed along the whole circumference. In the fuel supply groove 62h, a fuel supply hole 62a is formed at a position which faces the second fuel supply path 61b so as to penetrate an inner perimeter of the insert piece 62. Namely, the second fuel supply path 61b is communicated via the fuel supply hole 62a with a two-way delivery valve spring chamber 61a and communicated via the fuel supply groove 62h with the two-way delivery valve spring chamber 61a.

Similarly, in the outer peripheral surface of the insert piece 62 facing the second spill oil exhaust path 61c, a spill oil exhaust groove 62j is formed along the whole circumference. In the spill oil exhaust groove 62j, a spill oil exhaust port 62c is formed at a position which faces the second spill oil exhaust path 61c so as to penetrate the inner perimeter of the insert piece 62. Namely, the second spill oil exhaust path 61c is communicated via the spill oil exhaust port 62c with an inside of the insert piece 62 and communicated via the spill oil exhaust groove 62j and the spill oil exhaust port 62c with the inside of the insert piece 62.

When the fuel injection pump 1 discharges fuel, by the electromagnetic spill valve 60 operated based on a signal from the control device (not shown), the communication of the second fuel supply path 61b and the second spill oil exhaust path 61c of the housing 61 is cut off. Accordingly, fuel pressure in the second fuel supply path 61b is not released via the second spill oil exhaust path 61c and is maintained. Then, an inside of the two-way delivery valve spring chamber 61a is filled up with pressurized fuel flowing via an inside of the pressurizing chamber 16 (see Fig. 1), an inside of the first fuel supply path 12b, an inside of the second fuel supply path 61b, and the fuel supply hole 62a of the insert piece 62.

At this time, even if the insert piece 62 is rotated in the insert piece hole 61d so that the second fuel supply path 61b does not face the fuel supply hole 62a, the pressurized fuel reaches the inside of the two-way delivery valve spring chamber 61a via the fuel supply groove 62h of the insert piece 62. Namely, even if the insert piece 62 is rotated in the insert piece hole 61d, fuel supply is not prevented.

When the fuel injection pump 1 stops discharge of fuel, based on a signal from the control device (not shown), the second fuel supply path 61b is communicated with the second spill oil exhaust path 61c by the electromagnetic spill valve 20. Accordingly, fuel pressure in the second fuel supply path 61b is released via the second spill oil exhaust path 61c. Then, fuel is discharged from the second fuel supply path 61b via the fuel supply hole 62a of the insert piece 62, the inside of the insert piece 62, the spill oil exhaust port 62c of the insert piece 62 and the second spill oil exhaust path 61c to the fuel supply/exhaust chamber 11c.

At this time, even if the insert piece 62 is rotated in the insert piece hole 61d so that the second fuel supply path 61b does not face the fuel supply hole 62a and the second spill oil exhaust path 61c does not face the spill oil exhaust port 62c, fuel in the second fuel supply path 61b reaches the inside of the insert piece 62 via the fuel supply groove 62h and the fuel supply hole 62a. Then, the fuel reaching the inside of the insert piece 62 is discharged via the spill oil exhaust groove 62j and the spill oil exhaust port 62c into the fuel supply/exhaust chamber 11c. Namely, even if the insert piece 62 is rotated in the insert piece hole 61d, fuel supply is not prevented.

According to the configuration, it is not necessary to make the position of the fuel path of the housing 61 in agreement with the position of the fuel path of the insert piece 62 and to secure the insert piece 62 so as not to be rotatable in the housing 61.

### Industrial Applicability

The present invention can be used for a fuel injection pump provided in a diesel engine.

### Description of Notations

- 1: fuel injection pump
- 20: electromagnetic spill valve
- 21: housing
- 21d: insert piece hole
- 22: insert piece
- 22b: valve seat
- 23: spill valve body

## Claims

1. A fuel injection pump having an electromagnetic spill valve, **characterized in that** the electromagnetic spill valve comprising:
a housing in which an insert piece hole is formed;
an insert piece formed substantially like a cylinder whose inner peripheral surface is provided therein with a valve seat and inserted detachably into the insert piece hole;
a spill valve body formed substantially like a cylinder whose outer peripheral surface is provided therein with a seal surface which can be seated on the valve seat and inserted slidably into the insert piece; and
a securing means securing a position of the insert piece concerning the insert piece hole around an axis.

2. The fuel injection pump according to claim 1, wherein the securing means comprises:
a securing hole communicated with the insert piece hole from a side surface of the housing;
a notched part formed in an outer peripheral surface of the insert piece facing the securing hole; and
a securing member inserted into the securing hole and the notched part.

3. The fuel injection pump according to claim 1, wherein the securing means comprises:
a housing side notched part formed in an inner peripheral surface of the insert piece hole;
an insert piece side notched part formed in an outer peripheral surface of the insert piece facing the housing side notched part;
a securing member inserted into the housing side notched part and the insert piece side notched part; and
a sealing member sealing the insert piece and the securing member to an inside of the housing.

4. The fuel injection pump according to claim 1, wherein the securing means comprises:
a housing side flat surface part formed in an inner peripheral surface of the insert piece hole, and
an insert piece side flat surface part formed in an outer peripheral surface of the insert piece facing the housing side flat surface part.
